(19) Europäisches Patentamt

European Patent Office

Office européen des brevets

(11) **EP 1 203 791 A1**

(12) **EUROPEAN PATENT APPLICATION**
published in accordance with Art. 158(3) EPC

(43) Date of publication:
**08.05.2002 Bulletin 2002/19**

(51) Int Cl.⁷: **C08L 57/10**, C08L 33/00,
C08L 51/06, C09D 157/10,
C09D 133/00, C09D 151/06,
C08J 7/04

(21) Application number: **00927817.7**

(22) Date of filing: **19.05.2000**

(86) International application number:
**PCT/JP00/03226**

(87) International publication number:
**WO 00/71617 (30.11.2000 Gazette 2000/48)**

(84) Designated Contracting States:
**AT BE CH CY DE DK ES FI FR GB GR IE IT LI LU
MC NL PT SE**

(30) Priority: **21.05.1999 JP 14159099**

(71) Applicant: **Mitsui Chemicals, Inc.
Tokyo 100-6070 (JP)**

(72) Inventors:
 • **SATOU, Ken
 Sakae-ku, Yokohama-shi, Kanagawa 244-084
 (JP)**
 • **NAKANO, Makoto
 Chigasaki-shi, Kanagawa 253-0061 (JP)**
 • **ISHIDA, Tadashi
 Sakae-ku, Yokohama-shi, Kanagawa 244-084
 (JP)**
 • **HOSHINO, Futoshi
 Kita-ku, Tokyo 115-0053 (JP)**

(74) Representative: **Strehl Schübel-Hopf & Partner
Maximilianstrasse 54
80538 München (DE)**

(54) **RESIN COMPOSITION AND PROCESS FOR PRODUCING THE SAME**

(57) A gas barrier film-forming resin composition containing a resin (A) and a resin (B) is disclosed, wherein the resin (A) is a (co)polymer comprising 5 to 100 wt% of a monomer (a-1), 0 to 95 wt% of a monomer (a-2), and 0 to 95 wt% of another monomer (a-3) based on the total weight of the monomer (a-1) containing the carboxyl group, the monomer (a-2) containing the hydroxyl group and another monomer (a-3); the resin (B) is a (co)polymer comprising 0 to 4 wt% of a monomer (b-1), and 96 to 100 wt% of a monomer (b-2) and/or a monomer (b-3) based on the total weight of the monomer (b-1) containing the carboxyl group, the monomer (b-2) containing the hydroxyl group and the other monomer (b-3); and all the monomers constituting the resin (A) and the resin (B) do not include acrylonitrile, vinyl chloride and vinylidene chloride.

**Description**

BACKGROUND OF THE INVENTION

(i) Field of the Invention

The present invention relates to a gas barrier film-forming resin composition.
The present invention relates to a method for producing a gas barrier film-forming resin composition.
The present invention relates to a gas barrier coating composition.
The present invention relates to a gas barrier structure coated with a gas barrier film-forming resin composition or a gas barrier coating composition.
The present invention relates to a gas barrier film coated with a gas barrier film-forming resin composition or a gas barrier coating composition.
The gas barrier structure and the gas barrier film obtained by the present invention adapt to environmental problems.

(ii) Description of the Related Art

In recent years, owing the diversification and sophistication of gastronomic culture, the diversification of drugs and the like, there is increasing year by year the need for protecting the contents of foods, drugs and the like from becoming deteriorated or rotten over a long time period. Therefore, also for a plastic film used as a packaging material, gas barrier properties are more demanded year by year.
Heretofore, to impart gas barrier properties to plastic films of a polyethylene, polypropylene, polyethylene terephthalate, polynylon and cellophane or paper, a gas barrier resin layer has been formed on them. As a typical example thereof, a polyvinylidene chloride (hereinafter referred to as "PVDC") is applied onto a biaxially oriented film comprising a polypropylene film or the like, and the resulting film is heated and then dried to form the gas barrier film.
Japanese Patent Application Laid-Open No. 50211/1991 (applicant: Mitsubishi Chemical BASF Co., Ltd.) discloses a technique of producing an aqueous dispersion of a vinylidene chloride-based polymer having excellent gas barrier properties and printability. This technique is a multistage polymerization process comprising the steps of polymerizing 85 to 95 wt% of vinylidene chloride and 5 to 15 wt% of at least one monomer selected from methyl methacrylate, methyl acrylate and acrylonitrile or a mixture thereof as a monomer mixture (1), and then polymerizing 20 to 65 wt% of at least one monomer selected from the group consisting of methyl methacrylate and vinyl aromatic compounds, 35 to 80 wt% of a monomer selected from the group consisting of an alkyl acrylate, an alkyl methacrylates and a vinyl ester, and 0.2 to 5 wt% of a hydroxyl group-containing monomer as a monomer mixture (2). In this technique, the monomer mixture (2) is used in an amount of 0.5 to 20 parts by weight with respect to 100 parts by weight of the monomer mixture (1) to produce the vinylidene chloride-based polymer.
However, a recent environmental problem caused by dioxins becomes a trigger, and the tendency of dechlorination begins to accelerate also in a packaging material industry. Therefore, as a substitute coating for a PVDC, a polyacrylonitrile or a polyvinyl alcohol (hereinafter referred to as "PVA") has started to be used.
However, when the polyacrylonitrile is used, a residual unpolymerized acrylonitrile monomer must be removed expending much effort, because an acrylonitrile monomer has toxicity. Further, to be used in the field of food, a gas barrier resin has been desired in which such an acrylonitrile monomer having the high toxicity is not used as a raw material as much as possible.
Further, the PVA which is usually applied as an aqueous solution is liable to become highly viscous, and hence, it is applied at a low concentration. However, when it is applied at the low concentration, a long drying time and a large drying energy are required. In addition, owing to poor coating properties caused by an intrinsic viscosity, the PVA has a problem that productivity decreases.
The present invention has been developed in view of the above circumstances, and it is an object of the present invention to provide a resin composition having an excellent environmental adaptability, workability and gas barrier properties. Another object of the present invention is to provide a gas barrier structure.

SUMMARY OF THE INVENTION

The present inventors have conducted intensive studies to solve the above problems and found that, even when such monomers as vinylidene chloride, acrylonitrile and vinyl chloride are not used as raw materials, a resin composition comprising a resin (A) and a resin (B) in a specific ratio can possess as good characteristics (such as resin solid content and degree of viscosity) as those of a PVDC, and a polypropylene film or the like coated with the resin composition can possess excellent gas barrier properties. As a result, the present invention has been completed.

That is, the present invention is defined by the following features.

[1] A gas barrier film-forming resin composition containing a resin (A) and a resin (B), wherein

the resin (A) is a (co)polymer comprising 5 to 100 wt% of a monomer (a-1) containing a carboxyl group, 0 to 95 wt% of a monomer (a-2) containing a hydroxyl group, and 0 to 95 wt% of another monomer (a-3) based on the total weight of the monomer (a-1) containing the carboxyl group, the monomer (a-2) containing the hydroxyl group and the other monomer (a-3),

the resin (B) is a (co)polymer comprising 0 to 4 wt% of a monomer (b-1) containing a carboxyl group, and 96 to 100 wt% of the total of a monomer (b-2) containing a hydroxyl group and/or another monomer (b-3) based on the total weight of the monomer (b-1) containing the carboxyl group, the monomer (b-2) containing the hydroxyl group and the other monomer (b-3), and

all the monomers constituting the resin (A) and the resin (B) do not include acrylonitrile, vinyl chloride and vinylidene chloride.

[2] The composition according to the paragraph [1], wherein the carboxyl group-containing monomer(s) (a-1) and/or (b-1) is an unsaturated carboxylic acid,

the hydroxyl group-containing monomer(s) (a-2) and/or (b-2) is a hydroxyl group-containing unsaturated carboxylate or a hydroxyl group-containing unsaturated ether, and

the other monomer(s) (a-3) and/or (b-3) is at least one selected from the group consisting of an alkyl acrylate, an alkyl methacrylate, an aromatic monomer, an amido group-containing monomer, an epoxy group-containing monomer, a sulfonic group-containing monomer, butadiene, ethylene and vinyl acetate.

[3] The composition according to the paragraph [1] or [2], wherein the gas barrier film-forming resin composition comprising the resin (A) and the resin (B) is a mixture of the resin (A) and the resin (B).

[4] The composition according to the paragraph [1] or [2], wherein the gas barrier film-forming resin composition comprising the resin (A) and the resin (B) is formed by chemical bond and/or adsorption of the resin (A) and the resin (B).

[5] The composition according to any of the paragraphs [1] to [4], wherein a film formed from the gas barrier resin composition exhibits gas barrier properties of $20 \times 10^{-12}$ cm$^3$·cm/cm$^2$/s/mmHg or lower against oxygen or carbon dioxide at a temperature of 20°C and a relative humidity of 65%.

[6] The composition according to any of the paragraphs [1] to [5], wherein

the amount of the resin (A) is in a range of 10 to 90 wt% and

the amount of the resin (B) is in a range of 90 to 10 wt% based on the total weight of the resin (A) and the resin (B).

[7] The composition according to any of the paragraphs [1] to [6], wherein the resin (A) is a copolymer comprising

5 to 80 wt% of the monomer (a-1) containing the carboxyl group,

20 to 95 wt% of the monomer (a-2) containing the hydroxyl group, and

0 to 75 wt% of the other monomer (a-3) based on the total weight of the monomer (a-1) containing the carboxyl group, the monomer (a-2) containing the hydroxyl group and the other monomer (a-3).

[8] The composition according to any of the paragraphs [1] to [7], wherein the carboxyl group-containing monomer (a-1) and/or the carboxyl group-containing monomer (b-1) contain(s) acrylic acid and/or methacrylic acid.

[9] The composition according to any of the paragraphs [1] to [8], wherein the hydroxyl group-containing monomer (a-2) and/or the hydroxyl group-containing monomer (b-2) contain(s) 2-hydroxyethyl acrylate and/or 2-hydroxyethyl methacrylate.

[10] The composition according to any of the paragraphs [1] to [9], wherein the other monomer (a-3) and/or the other monomer (b-3) is at least one selected from the group consisting of an alkyl acrylate, an alkyl methacrylate, styrene, vinyl acetate, acrylamide and methacrylamide.

[11] The composition according to any of the paragraphs [1] to [10], wherein the resin (A) and the resin (B) are dissolved or dispersed in water.

[12] The composition according to any of the paragraphs [1] to [10], wherein the resin (A) is dissolved in water and the resin (B) is dispersed in water as resin particles.

[13] The composition according to any of the paragraphs [1] to [10], wherein resin particles containing both the resin (A) and the resin (B) are dispersed in water.

[14] The composition according to any of the paragraphs [1] to [13], wherein the total amount of the monomer (a-1) and the monomer (a-2) is in a range of 50 to 100 wt% based on the total weight of the monomers (a-1), (a-2) and (a-3).

[15] The composition according to any of the paragraphs [1] to [14], wherein the amount of the monomer (b-3) is in a range of 70 to 100 wt% based on the total weight of the monomers (b-1), (b-2) and (b-3).

[16] A method for producing the gas barrier film-forming resin composition according to any of the paragraphs [1] to [15], wherein the resin (B) is polymerized in the presence of the resin (A).

[17] A method for producing the gas barrier film-forming resin composition according to any of the paragraphs [1] to [15], wherein the resin (A) is polymerized in the presence of the resin (B).

[18] A gas barrier structure formed by coating a substrate with the composition according to any of the paragraphs [1] to [15].

[19] A gas barrier film formed by coating a substrate film with the composition according to any of the paragraphs [1] to [15].

[20] A gas barrier film comprising a gas barrier layer and thermoplastic resin films sandwiching the gas barrier layer vertically, wherein the gas barrier layer is a layer formed from the composition according to any of the paragraphs [1] to [15].

[21] A gas barrier properties imparting method, comprising the step of coating a substrate with the composition according to any of the paragraphs [1] to [15].

[22] The method according to the paragraph [21], wherein the substrate is a film.

The resin composition according to the present invention is a resin composition which adapts to environmental problems and contains neither acrylonitrile, vinyl chloride nor vinylidene chloride and exhibits extremely excellent gas barrier properties. Therefore, the resin composition is useful as a coating for a variety of packaging materials and construction materials.

The resin composition of the present invention has resin characteristics (such as resin solid content and degree of viscosity) comparable to those of a PVDC and excellent coating properties and gas barrier properties. Therefore, the resin composition can be used as a substitute gas barrier coating for the PVDC.

When the resin composition according to the present invention is applied as a coating composition, it can be used for a food packaging material, a drug packaging material or a preservative material for an architectural construction.

Summarizing the above description, the present invention exhibits at least the following effects (1) to (3).

(1) It adapts to environmental problems.
(2) It exhibits excellent gas barrier properties.
(3) It is useful as a coating material for a variety of packaging materials and construction materials.

BEST MODE OF CARRYING OUT THE INVENTION

[Gas barrier properties]

The gas barrier properties in the present invention can be measured by a method defined in ASTM D-3985 or JIS K7126. The gas barrier properties value in the present invention is expressed by a permeability coefficient measured at a temperature of 20°C and a relative humidity of 65%.

The oxygen or carbon-dioxide permeability coefficient of a resin composition film obtained by the present invention is $20 \times 10^{-12}$ $cm^3 \cdot cm/cm^2/s/mmHg$ or lower, more preferably $15 \times 10^{-12}$ $cm^3 \cdot cm/cm^2/s/mmHg$ or lower, much more preferably $10 \times 10^{-12}$ $cm^3 \cdot cm/cm^2/s/mmHg$ or lower, the most preferably $5 \times 10^{-12}$ $cm^3 \cdot cm/cm^2/s/mmHg$ or lower.

[Carboxyl Group-Containing Monomers]

The carboxyl group-containing monomers (a-1) and (b-1) in the present invention are not particularly limited as long as they contain a carboxyl group.

Illustrative examples of the carboxyl group-containing monomers (a-1) and (b-1) in the present invention include unsaturated carboxylic acids such as acrylic acid, methacrylic acid, maleic acid, itaconic acid, crotonic acid and fumaric acid. Of these compounds, acrylic acid, methacrylic acid, maleic acid and itaconic acid are preferred, and acrylic acid and methacrylic acid are particularly preferred. These monomers can be selected solely or in combination of two or more.

[Hydroxyl Group-Containing Monomers]

The hydroxyl group-containing monomers (a-2) and (b-2) are not particularly limited as long as they contain a hydroxxl group.

Illustrative examples of the hydroxyl group-containing monomers (a-2) and (b-2) in the present invention include hydroxyl group-containing unsaturated carboxylates or hydroxyl group-containing unsaturated ethers such as 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, 2-hydroxyvinyl ether, polyethylene glycol monoacrylate, polyethylene glycol monomethacrylate, polypropylene glycol monoacrylate and polypropylene glycol monomethacrylate. These monomers can be selected solely or in combination of two or more. Of these, those containing 2-hydroxyethyl acrylate and/or 2-hydroxyethyl methacrylate are particularly preferred because excellent water solubility and good polymerization stability can be attained.

[Other Monomers]

The other monomers (copolymerizable monomers other than the monomers (a-1), (a-2), (b-1) and (b-2)) (a-3) and (b-3) in the present invention are not particularly limited as long as they are not acrylonitrile, vinylidene chloride or vinyl chloride.

Illustrative examples of the other copolymerizable monomers (a-3) and (b-3) in the present invention include alkyl acrylates and alkyl methacrylates such as methyl acrylate, methyl methacrylate, ethyl acrylate, ethyl methacrylate, n-propyl acrylate, n-propyl methacrylate, isopropyl acrylate, isopropyl methacrylate, n-butyl acrylate, n-butyl methacrylate, isobutyl acrylate, isobutyl methacrylate, t-butyl acrylate, t-butyl methacrylate, 2-ethylhexyl acrylate and 2-ethylhexyl methacrylate; aromatic monomers such as styrene, α-methylstyrene and divinylbenzene; amido group-containing monomers such as acrylamide, methacrylamide, N-methylacrylamide and N-methylmethacrylamide; epoxy group-containing monomers such as glycidyl acrylate and glycidyl methacrylate; sulfonic group-containing monomers such as styrenesulfonic acid and salts thereof and 2-acrylamido-2-methyl propane sulfonic acid and salts thereof; butadiene; ethylene; and vinyl acetate.

These monomers can be selected solely or in combination of two or more. Of these, at least one selected from the group consisting of an alkylacrylate, an alkyl methacrylate, styrene, vinyl acetate, acrylamide and methacrylamide is preferred, and those containing an alkyl acrylate and/or an alkyl methacrylate are particularly preferred, because good polymerization stability can be attained.

[Resin (A)]

The resin (A) in the present invention is a (co)polymer comprising the carboxyl group-containing monomer (a-1), the hydroxyl group-containing monomer (a-2) and the other copolymerizable monomer (a-3).

The amount of the monomer (a-1) is 5 to 100 wt%, preferably 20 to 95 wt%, more preferably 35 to 95 wt%, based on the total weight of the monomers (a-1), (a-2) and (a-3). Further, the amount of the monomer (a-2) is 0 to 95 wt% based on the above total weight. Sufficient gas barrier properties can be attained by such amounts of the monomers (a-1) and (a-2).

The total amount of the monomers (a-1) and (a-2) is preferably 50 to 100 wt%, more preferably 70 to 100 wt%, the most preferably 90 ton 100 wt%, based on the above total weight. Sufficient gas barrier properties can be attained by such a total amount.

The hydroxyl group-containing monomer (a-2) and the other copolymerizable monomer (a-3) are selected as appropriate according to the properties required for the resin. When water resistance particularly is desired, it is preferable that the amount of the carboxyl group-containing monomer (a-1) be 5 to 80 wt%, the amount of the hydroxyl group-containing monomer (a-2) be 20 to 95 wt% and the amount of the other copolymerizable monomer (a-3) be 0 to 75 wt%, and it is more preferable that the amount of the carboxyl group-containing monomer (a-1) be 5 to 50 wt%, the amount of the hydroxyl group-containing monomer (a-2) be 50 to 95 wt% and the amount of the other copolymerizable monomer (a-3) be 0 to 45 wt%.

[Glass Transition Temperature of Resin (A)]

The theoretical glass transition temperature of the resin (A) is not particularly limited but is generally 0 to 200°C. When the glass transition temperature of the resin (A) is significantly lower than room temperature, e.g., lower than a freezing point, a formed film may become sticky, while when it is higher than 200°C, the drying temperature at the time of forming a film must be set to be significantly high so as to prevent unsuccessful film formation.

[Weight Average Molecular Weight of Resin (A)]

The weight average molecular weight of the resin (A) is not particularly limited but is preferably 1,000 to 100,000, in general. When the molecular weight is lower than 1,000, a formed film may have low water resistance, while when the molecular weight is higher than 100,000, the viscosity of the resin increases, thereby making the resin difficult to handle in some cases. The molecular weight can be measured by GPC (gel permeation chromatography).

[Resin (B)]

The resin (B) in the present invention is a (co)polymer comprising 0 to 4 wt% of a carboxyl group-containing monomer (b-1) and 96 to 100 wt% of at least one monomer selected from the group consisting of a hydroxyl group-containing monomer (b-2) and the other copolymerizable monomer (b-3) based on the total weight of the carboxyl group-containing monomer (b-1), hydroxyl group-containing monomer (b-2) and the other copolymerizable monomer (b-3).

When the amount of the carboxyl group-containing monomer (b-1) is larger than 4 wt%, the viscosity of the resin increases, thereby making the resin difficult to handle in some cases. When water resistance is particularly desired, it is preferable that the amount of the carboxyl group-containing monomer (b-1) be 0 to 2 wt%, the amount of the hydroxyl group-containing monomer (b-2) be 0 to 20 wt% and the amount of the other copolymerizable monomer (b-3) be 78 to 100 wt%, and it is more preferable that the amount of the carboxyl group-containing monomer (b-1) be 0 wt%, the amount of the hydroxyl group-containing monomer (b-2) be 0 to 10 wt% and the amount of the other copolymerizable monomer (b-3) be 90 to 100 wt%.

[Hydroxyl Group-Containing Monomer (b-2)]

As the hydroxyl group-containing monomer (b-2), 2-hydroxyethyl acrylate and 2-hydroxyethyl methacrylate are particularly suitable.

[Other Monomer (b-3)]

As the other monomer (copolymerizable monomer other than (b-1) and (b-2)) (b-3), methyl methacrylate, methyl acrylate, ethyl acrylate, ethyl methacrylate, n-butyl acrylate, n-butyl methacrylate, isobutyl acrylate, isobutyl methacrylate, t-butyl acrylate, t-butyl methacrylate, 2-ethylhexyl acrylate, 2-ethylhexyl methacrylate and styrene.

The amount of the monomer (b-3) is preferably 70 to 100 wt%, more preferably 85 to 100 wt%, the most preferably 96 to 100 wt%. With the amount of the monomer (b-3) within the above range, the resin (B) can have good production stability, and a resin composition obtained has good workability.

[Glass Transition Temperature of Resin (B)]

The theoretical glass transition temperature of the resin (B) is not particularly limited but is generally -50 to 200°C. The glass transition temperature is selected so that the composition of the present invention can be formed into a film successfully under the drying conditions.

[Weight Average Molecular Weight of Resin (B)]

The weight average molecular weight of the resin (B) is not particularly limited but is generally 10,000 to 10 million.

[Carboxyl Groups Contained in Resin (A) and Resin (B)]

The carboxyl groups contained in the resin (A) and the resin (B) can be neutralized, partially or wholly, with metal salts such as potassium and sodium; and organic bases such as ammonia and amine. From the viewpoint of the effect of improving the gas barrier properties and water resistance of a film, an organic base is preferred as a neutralizer.

The total amount of the carboxyl group-containing monomers (a-1) and (b-1) is preferably 10 to 90 wt%, more preferably 20 to 80 wt%, based on the total weight of the resin (A) and the resin (B). With the total amount of the carboxyl group-containing monomers (a-1) and (b-1) within the above range, good gas barrier properties can be attained.

[Gas barrier Film-forming resin Composition Containing Resin (A) and Resin (B)]

The gas barrier film-forming resin composition containing the resin (A) and the resin (B) according to the present invention is a composition formed by mixing the resin (A) and the resin (B) together or chemically bonding the resin (A) and the resin (B) to each other. Chemical bonds include a covalent bond, an ionic bond, a hydrogen bond and a coordinate bond as well as an adsorption phenomenon. The proportions of the resin (A) and the resin (B) are preferably 10 to 90 wt% and 90 to 10 wt% based on the total weight, respectively. When the proportion of the resin (A) is lower than 10 wt%, the gas barrier properties of a formed film may be lowered, while when it is higher than 90 wt%, the water resistance of the film may be lowered. The proportions of the resin (A) and the resin (B) are more preferably 30 to 90 wt% and 70 to 10 wt%, the most preferably 40 to 80 wt% and 60 to 20 wt%, respectively.

The resin (A) and the resin (B) in the present invention are suitably dissolved or dispersed in a solvent in terms of handling. It is more preferable that the resin (A) be dissolved in a solvent and the resin (B) be dispersed in a solvent such as water as resin particles. It is the most preferable that the resin particles containing both the resin (A) and the resin (B) be dispersed in water. The phrase "resin particles containing both the resin (A) and the resin (B) be dispersed in water" includes the embodiment that the resin (B) is dispersed in water and the resin (A) is adsorbed or bonded to the surface of the resin (B). Illustrative examples of such an embodiment include a composite emulsion comprising a hydrophobic core composed of an acrylic polymer and a water-soluble polymer composed of a water-soluble shell.

As described above, although a water-soluble polymer such as PVA is useful as a gas barrier material, it has the problem that the viscosity of an aqueous solution is high. It is assumed that this is caused by the entanglement of the molecular chains of the water-soluble polymer in water. On the contrary, when the above composite emulsion form is employed, the water-soluble polymer is adsorbed or bonded to the surface of the hydrophobic resin dispersion, whereby the entanglement of the molecular chains of the water-soluble polymer is suppressed, so that an increase in viscosity can be suppressed. Consequently, as compared in aqueous solution, which is the general embodiment of PVA coating, the resin composition of the present invention can attain good workability even when the concentration is increased.

A solvent to be used is not particularly limited. Illustrative examples of the solvent include water; alcohols such as methanol, ethanol, isopropyl alcohol and butanol; water-soluble organic solvents such as ketones, e.g., methyl ethyl ketone and acetone, glycols and ethers; and water-insoluble solvents such as toluene and xylene. These can be used solely or in combination of two or more. Particularly, a solvent containing water as a main component is suitable from the environmental viewpoint.

[Method for Producing Gas barrier Film-forming resin Composition Containing Resin (A) and Resin (B)]

A method for producing (or polymerizing) the gas barrier film-forming resin composition containing the resin (a) and the resin (b) according to the present invention is not particularly limited. In general, the polymerization is carried out in a solvent to control heat of polymerization. Radical polymerization is generally suitable.

[Initiator]

Illustrative examples of an initiator to be used in radical polymerization include hydrogen peroxide; persulfates such as ammonium persulfate, potassium persulfate and sodium persulfate; organic peroxides such as cumene hydroperoxide, t-butyl hydroperoxide, benzoyl peroxide, t-butylperoxy-2-ethyl hexanoate and t-butylperoxy benzoate; azo compounds such as azobisisobutyronitrile; and redox initiators comprising a combination of the above initiators, metal ions such as iron ions and reducing agents such as sodium sulphoxylate, formaldehyde, sodium pyrosulfite, sodium hydrogen sulfite, L-ascorbic acid and Rongalit.

The initiator is used in the radical polymerization generally in an amount of 0.1 to 20 wt% based on the total weight of the monomers.

[Molecular Weight Modifier]

Further, as required, mercaptans such as t-dodecyl mercaptan and n-dodecyl mercaptan and allyl compounds such as ally sulfonic acid, methallyl sulfonic acid and salts thereof can be used as a molecular weight modifier.

[Surfactant]

Further, to improve the stability of the resin particles, a surfactant used in conventional emulsion polymerization can also be used and is particularly suitable for a solvent containing water as a main component. Illustrative examples of the surfactant include an anionic surfactant, a nonionic surfactant, a cationic surfactant and another reactive surfactant. These surfactants can be used solely or in combination of two or more.

(1) Nonionic Surfactants

Illustrative examples of the nonionic surfactant include polyoxyethylene lauryl ether, polyoxyethylene octylphenyl ether, polyoxyethylene oleylphenyl ether, polyoxyethylene nonylphenyl ether, oxyethylene/oxypropylene block copolymer, t-octylphenoxyethyl polyethoxyethanol and nonylphenoxyethyl polyethoxyethanol.

(2) Anionic Surfactants

Illustrative examples of the anionic surfactant include sodium dodecylbenzenesulfonate, sodium lauryl sulfate, sodium alkyldiphenyl ether disulfonate, sodium alkylnaphthalenesulfonate, sodium dialkyl sulfosuccinate, sodium stearate, potassium oleate, sodium dioctyl sulfosuccinate, sodium polyoxyethylene alkyl ether sulfate, sodium polyoxyethylene alkyl ether sulfate, sodium polyoxyethylene alkylphenyl ether sulfate, sodium dialkyl sulfosuccinate, sodium stearate, sodium oleate and sodium t-octylphenoxyethoxypolyethoxyethyl sulfate.

(3) Cationic Surfactants

Illustrative examples of the cationic surfactant include lauryl trimethyl ammonium chloride and stearyl trimethyl ammonium chloride.

[Average Particle Diameter of Resin Particles]

In the present invention, the average particle diameter of the resin particles constituting the resin composition is preferably 1 to 1,000 nm, more preferably 1 to 700 nm, the most preferably 1 to 500 nm. When the average particle diameter is larger than 1,000 nm, the smoothness of a formed film may be lost or the gas barrier properties of the film may deteriorate.

[Polymerization Method]

The monomers mentioned above can be charged at once or by portions or continuously charged dropwise into a solvent and polymerized at a temperatures of 0 to 20°C in the presence of the above initiator.
The resin composition of the present invention is formed by mixing the resin (A) and the resin (B) or chemically bonding the resin (A) and the resin (B). A desired resin composition can be obtained by a method comprising stirring the resin (A) and the resin (B) to mix them together after the resin (A) and the resin (B) are polymerized by the above method; a method comprising adding a crosslinking agent for chemically bonding the resin (A) and the resin (B) and stirring the resin (A) and the resin (B) to mix them together; a method of polymerizing the resin (B) in the presence of the resin (A); a method of polymerizing the resin (A) in the presence of the resin (B); or other method. To carry out the above polymerizations, the above polymerization method, solvents, initiators, molecular weight modifiers and surfactants can be used. In addition, illustrative examples of the crosslinking agent for chemically bonding the resin (A) and the resin (B) include metals such as iron, zinc, tin, copper, aluminum and zirconium and salts thereof; methylol compounds such as melamine; isocyanate compounds; glycidyl group-containing epoxy compounds; and aldehyde compounds such as glyoxal. These can be used solely or in combination of two or more.

[Additives]

The resin composition of the present invention may contain a variety of additives as required. Illustrative examples of the additives include a curing agent, crosslinking agent, pigment, film forming auxiliaries, antifoaming agent, preservative, thickener, thermal stabilizer, ultraviolet absorber, lubricant, coloring agent, antistatic agent, antiblocking agent and inorganic salts. Of these, a curing agent, a crosslinking agent and a pigment are preferably used in combination because they can improve the various properties of a formed film.

[Curing Agent and Crosslinking Agent]

Illustrative examples of the curing agent and crosslinking agent include metals such as iron, zinc, tin, copper, aluminum and zirconium and salts thereof; methylol compounds such as melamine; isocyanate compounds; glycidyl group-containing epoxy compounds; and aldehyde compounds such as glyoxal.
These curing agents and crosslinking agents are generally added in a proportion of 0.1 to 10 wt% based on the total weight of the monomers.

[Pigment]

Illustrative examples of the pigment include inorganic compound having layer-structure such as kaolinite, halloysite, montmorillonite, vermiculite, dickite, nacrite, antigorite, pyrophyllite, hectorite, bidelite, margarite, talc, tetra-silicic mica, muscovite, phlogopite and chlorite; inorganic compounds such as kaoline, calcium carbonate, titanium oxide, silicon oxide, calcium fluoride, lithium fluoride, alumina,- barium sulfate, zirconia and calcium phosphate; and organic fillers such as crosslinked polystyrene particles.

These pigments are generally added in a proportion of 1 to 30 wt%, more preferably 1 to 15 wt%, based on the total weight of the monomers.

When the proportion of the pigment is higher than 30 wt%, a formed film may have fine crevices, and its gas barrier properties may deteriorate. On the other hand, when the proportion is lower than 1 wt%, no effect can be obtained by the addition of the pigment.

[Third Component]

Further, a known water-soluble resin can be used as a third component in combination with the resin (A) and the resin (B). Illustrative examples of the known water-soluble resin include polyalcohol-based polymers, saccharides, amino acids, polyethylene oxides, polyethylene glycols and celluloses.

[Coating Composition]

The coating composition containing the resin composition of the present invention is coated and formed into a film on a substrate such as a film made of a thermosetting resin or thermoplastic resin, paper, construction board and architectural structure. Thereby, a film and structure having gas barrier properties can be obtained. Particularly, the coating composition can be coated on a thermoplastic resin film or paper to be formed into a gas barrier packaging film.

Further, when the film and structure having gas barrier properties have a multilayer structure, the layer coated with the coating composition containing the resin composition of the present invention can be an upper layer, an intermediate layer or a lower layer.

[Thermoplastic Resin Film]

Illustrative examples of the thermoplastic resin film include polyolefins such as polyethylene and polypropylene; polyesters such as polyethylene terephthalate, polybutylene terephthalate and polyethylene-2,6-naphthalate; polyamides such as nylon 6 and nylon 12; an ethylene-vinyl acetate copolymer or saponificated product thereof; polystyrenes; polycarbonates; polysulfones; polyphenylene oxides; polyphenylene sulfides; aromatic polyamides; polyimides; polyamideimides; celluloses; cellulose acetate; polyvinyl alcohols; and copolymers thereof. From the viewpoints of cost performance, transparency and gas barrier properties, a polyolefin film, a polyester film and a polyamide film are preferred.

The gas barrier film according to the present invention is a gas barrier film comprising a gas barrier layer and thermoplastic resin films sandwiching the gas barrier layer, and the gas barrier layer is preferably formed by forming the gas barrier film-forming resin composition of the present invention into a film. For example, a multilayer film having a first layer formed of a thermoplastic resin film, a second layer formed by forming the gas barrier film-forming resin composition of the present invention into a film and a third layer formed of a thermoplastic resin film laminated in this order is a preferred form of the gas barrier film of the present invention. When the gas barrier film of the present invention has the above structure, the deterioration of film properties caused by the damage to or water absorption of the film layer formed of the gas barrier film-forming resin composition of the present invention can be prevented effectively. The thickness of the layer formed of the gas barrier film-forming resin composition is set as appropriate. For example, it can be set to be 0.1 to 20 $\mu$m, preferably 0.5 to 10 $\mu$m (thickness after formed into a film and dried).

[Building Boards and Architectural Structures]

Further, when the gas barrier film-forming resin composition of the present invention is coated and formed into a film on a building board or an architectural structure, the effects of preventing deterioration by oxidation caused by oxygen and preventing neutralization caused by carbon dioxide can be obtained. Illustrative examples of the building board include a gypsum board, a cement board, a cemented excelsior board, an asbestos cement board, a fiber board, a calcium silicate board, a particle board and a plywood. Illustrative examples of the architectural structure include concrete, a steel frame, a wall, a beam and a floor.

Examples and Comparative Examples

Next, the present invention will be described in more detail with reference to Examples hereinafter.

In the following description, "%" and "part" indicate "% by weight" and "part by weight", respectively.

[Example 1]

300 Parts of deionized water were placed in a reactor and heated up to 80°C under a nitrogen gas stream. Separately, a mixture was prepared by neutralizing a mixture solution containing 129 parts of 2-hydroxyethyl methacrylate and 86 parts of acrylic acid with 48 parts of a 20% aqueous sodium hydroxide solution. Then, 11 parts of potassium persulfate were placed as an initiator in the reactor, and dissolved. The above monomer mixture solution was added dropwise into the reactor in 2 hours, and then kept at the same temperature for 2 hours to complete polymerization. Thereafter, 380 parts of ion exchanged water were added into the reactor, and then heated up to 80°C. Separately, a mixture solution containing 40 parts of methyl methacrylate, 37 parts of isobutyl acrylate, 3 parts of methacrylic acid and 0.2 part of n-dodecyl mercaptan was prepared. Then 0.4 part of ammonium persulfate was added as an initiator into the reactor, and dissolved. Afterward, the above mixture solution was added dropwise into the reactor in 3 hours, and then kept at the same temperature for 1 hour. Next, 0.1 part of ammonium persulfate was added as a catalyst, and the solution was then kept at the same temperature for 2 hours to complete polymerization. The obtained resin had a solid content of 30%, a pH of 4.0 and a weight average particle diameter of 320 nm as measured by light scattering.

As soon as the obtained resin was applied onto a 23-μm-thick biaxially oriented polyethylene terephthalate (hereinafter referred to as "PET") film having both surfaces subjected to corona discharge treatment so that the thickness of a dried film might be 2.5 μm, it was dried at 100°C for 1 minute by means of a hot air drier to form a film to be evaluated. Then, an oxygen gas permeability of the film was measured at a temperature of 20°C and a relative humidity of 65%. Thereafter, the oxygen gas permeability and an oxygen gas permeability coefficient of the resin film alone were calculated from the following equation. The results are shown in Table 1.

$$1/P<total> = 1/P<film> + 1/P<PET>$$

P<total>: An oxygen gas permeability of a laminated film having a PET film and a resin composition film laminated thereon.
P<film>: An oxygen gas permeability of the resin composition film alone.
P<PET>: An oxygen gas permeability of the biaxially oriented polyethylene terephthalate (PET) film alone. The gas permeability coefficient

$$= 1.523 \times 10^{-12} \times P<film> \times d$$

d: A thickness (mm) of the resin composition film alone.

[Example 2]

467 Parts of deionized water were placed in a reactor and heated up to 80°C under a nitrogen gas stream. Separately, a mixture solution containing 19 parts of 2-hydroxyethyl methacrylate and 171 parts of acrylic acid were prepared. 10 parts of potassium persulfate were added as an initiator into the reactor, and dissolved. Afterward, the above monomer mixture solution was added dropwise into the reactor in 2 hours, and the solution was then kept at the same temperature for 2 hours to complete polymerization. Thereafter, 80 parts of ion exchanged water and 111 parts of a 20% aqueous sodium hydroxide solution were added to the reactor, and the solution was heated up to 80°C. Separately, a mixture solution containing 25 parts of methyl methacrylate, 23 parts of isobutyl acrylate, 2 parts of methacrylic acid and 0.1 part of n-dodecyl mercaptan was prepared. 0.3 part of ammonium persulfate was placed as an initiator in the reactor, and dissolved. Next, the above monomer mixture solution was added dropwise to the reactor in 3 hours, and the solution was then kept at the same temperature for 1 hour. Then, 0.1 part of ammonium persulfate was added as a catalyst, and the solution was then kept at the same temperature for 2 hours to complete polymerization. The obtained resin had a solid content of 30%, a pH of 3.8 and a weight average particle diameter of 380 nm as measured by light scattering.

Afterward, in the same manner as in Example 1, a film to be evaluated was prepared, an oxygen gas permeability was measured, and an oxygen gas permeability coefficient was calculated. The results are shown in Table 1.

[Comparative Example 1]

A film to be evaluated was prepared as in Example 1 by use of commercial polyvinylidene chloride latex for gas barrier coating having a solid content of 42% and a pH of 2, and an oxygen gas permeability was measured, and an oxygen gas permeability coefficient was calculated in the same manner as in Example 1. The results are shown in Table 1.

[Comparative Example 2]

It was attempted to dissolve a commercial polyvinyl alcohol (CLAREPOVAL PVA-205) in ion exchanged water so as to be a solid content of 42%, but the dissolution was impossible. In addition, it was adjusted to a solid content of 30%, but a viscosity of the solution became 10,000 mPa·s, so that its application was impossible.

EP 1 203 791 A1

## Table 1

| | Oxygen Gas Permeability Coefficient $cm^3 \cdot cm/cm^2/s/mmHg$ | Resin Solid Content % | Viscosity $mPa \cdot s/20°C$ | Coating Properties | Adaptability to Environment |
|---|---|---|---|---|---|
| Ex. 1 | $0.5 \times 10^{-13}$ | 30 | 350 | ○ | ○ |
| Ex. 2 | $0.2 \times 10^{-13}$ | 30 | 200 | ○ | ○ |
| Comp. Ex. 1 | $0.5 \times 10^{-13}$ | 42 | 20 | ○ | ✕ |
| Comp. Ex. 2 | - | 30 | 10,000 | ✕ | ○ |

**Claims**

1. A gas barrier film-forming resin composition containing a resin (A) and a resin (B), wherein
   the resin (A) is a (co)polymer comprising 5 to 100 wt% of a monomer (a-1) containing a carboxyl group, 0 to 95 wt% of a monomer (a-2) containing a hydroxyl group, and 0 to 95 wt% of another monomer (a-3) based on the total weight of the monomer (a-1) containing the carboxyl group, the monomer (a-2) containing the hydroxyl group and the other monomer (a-3),
   the resin (B) is a (co)polymer comprising 0 to 4 wt% of a monomer (b-1) containing a carboxyl group, and 96 to 100 wt% of the total of a monomer (b-2) containing a hydroxyl group and/or another monomer (b-3) based on the total weight of the monomer (b-1) containing the carboxyl group, the monomer (b-2) containing the hydroxyl group and the other monomer (b-3), and
   all the monomers constituting the resin (A) and the resin (B) do not include acrylonitrile, vinyl chloride and vinylidene chloride.

2. The composition according to claim 1, wherein the carboxyl group-containing monomer(s) (a-1) and/or (b-1) is an unsaturated carboxylic acid,
   the hydroxyl group-containing monomer(s) (a-2) and/or (b-2) is a hydroxyl group-containing unsaturated carboxylate or a hydroxyl group-containing unsaturated ether, and
   the other monomer(s) (a-3) and/or (b-3) is at least one selected from the group consisting of an alkyl acrylate, an alkyl methacrylate, an aromatic monomer, an amido group-containing monomer, an epoxy group-containing monomer, a sulfonic group-containing monomer, butadiene, ethylene and vinyl acetate.

3. The composition according to claim 1 or 2, wherein the gas barrier film-forming resin composition comprising the resin (A) and the resin (B) is a mixture of the resin (A) and the resin (B).

4. The composition according to claim 1 or 2, wherein the gas barrier film-forming resin composition comprising the resin (A) and the resin (B) is formed by chemical bond and/or adsorption of the resin (A) and the resin (B).

5. The composition according to any of claims 1 to 4, wherein a film formed from the gas barrier resin composition exhibits gas barrier properties of $20 \times 10^{-12}$ cm$^3$·cm/cm$^2$/s/mmHg or lower against oxygen or carbon dioxide at a temperature of 20°C and a relative humidity of 65%.

6. The composition according to any of claims 1 to 5, wherein
   the amount of the resin (A) is in a range of 10 to 90 wt% and
   the amount of the resin (B) is in a range of 90 to 10 wt% based on the total weight of the resin (A) and the resin (B).

7. The composition according to any of claims 1 to 6, wherein the resin (A) is a copolymer comprising
   5 to 80 wt% of the monomer (a-1) containing the carboxyl group,
   20 to 95 wt% of the monomer (a-2) containing the hydroxyl group, and
   0 to 75 wt% of the other monomer (a-3) based on the total weight of the monomer (a-1) containing the carboxyl group, the monomer (a-2) containing the hydroxyl group and the other monomer (a-3).

8. The composition according to any of claims 1 to 7, wherein the carboxyl group-containing monomer (a-1) and/or the carboxyl group-containing monomer (b-1) contain(s) acrylic acid and/or methacrylic acid.

9. The composition according to any of claims 1 to 8, wherein the hydroxyl group-containing monomer (a-2) and/or the hydroxyl group-containing monomer (b-2) contain(s) 2-hydroxyethyl acrylate and/or 2-hydroxyethyl methacrylate.

10. The composition according to any of claims 1 to 9, wherein the other monomer (a-3) and/or the other monomer (b-3) is at least one selected from the group consisting of an alkyl acrylate, an alkyl methacrylate, styrene, vinyl acetate, acrylamide and methacrylamide.

11. The composition according to any of claims 1 to 10, wherein the resin (A) and the resin (B) are dissolved or dispersed in water.

12. The composition according to any of claims 1 to 10, wherein the resin (A) is dissolved in water and the resin (B) is dispersed in water as resin particles.

13. The composition according to any of claims 1 to 10, wherein resin particles containing both the resin (A) and the resin (B) are dispersed in water.

14. The composition according to any of claims 1 to 13, wherein the total amount of the monomer (a-1) and the monomer (a-2) is in a range of 50 to 100 wt% based on the total weight of the monomers (a-1), (a-2) and (a-3).

15. The composition according to any of claims 1 to 14, wherein the amount of the monomer (b-3) is in a range of 70 to 100 wt% based on the total weight of the monomers (b-1), (b-2) and (b-3).

16. A method for producing the gas barrier film-forming resin composition according to any of claims 1 to 15, wherein the resin (B) is polymerized in the presence of the resin (A).

17. A method for producing the gas barrier film-forming resin composition according to any of claims 1 to 15, wherein the resin (A) is polymerized in the presence of the resin (B).

18. A gas barrier structure formed by coating a substrate with the composition according to any of claims 1 to 15.

19. A gas barrier film formed by coating a substrate film with the composition according to any of claims 1 to 15.

20. A gas barrier film comprising a gas barrier layer and thermoplastic resin films sandwiching the gas barrier layer, wherein the gas barrier layer is a layer formed from the composition according to any of claims 1 to 15.

21. A gas barrier properties imparting method, comprising the step of coating a substrate with the composition according to any of claims 1 to 15.

22. The method according to claim 21, wherein the substrate is a film.

<table>
<tr><td colspan="2"><strong>INTERNATIONAL SEARCH REPORT</strong></td><td>International application No.<br>PCT/JP00/03226</td></tr>
</table>

| A. CLASSIFICATION OF SUBJECT MATTER |
|---|
| Int.Cl⁷   C08L57/10, C08L33/00, C08L51/06, C09D157/10,<br>               C09D133/00, C09D151/06, C08J7/04, |

According to International Patent Classification (IPC) or to both national classification and IPC

| B.   FIELDS SEARCHED |
|---|
| Minimum documentation searched (classification system followed by classification symbols)<br>     Int.Cl⁷   C08L1/00-101/16, C09D1/00-201/10, C08J7/04 |
| Documentation searched other than minimum documentation to the extent that such documents are included in the fields searched |
| Electronic data base consulted during the international search (name of data base and, where practicable, search terms used)<br>     WPI/L |

C.   DOCUMENTS CONSIDERED TO BE RELEVANT

| Category* | Citation of document, with indication, where appropriate, of the relevant passages | Relevant to claim No. |
|---|---|---|
| X | WO, 9622339, A1 (BASF LACKE & FARBEN AG),<br>25 July, 1996 (25.07.96),<br>Claims<br>& JP, 08-199114, A<br>Claims<br>& EP, 804515, A1    & US, 5942570, A | 1-17 |
| A | JP, 9-151263, A (Toray Industries, Inc.),<br>10 June, 1997 (10.06.97),<br>Claims   (Family: none) | 1-22 |
| A | JP, 8-208933, A (Kureha Chemical Industry Co., Ltd.),<br>13 August, 1996 (13.08.96),<br>Claims   (Family: none) | 1-22 |
| A | JP, 3-275780, A (KANSAI PAINT CO., LTD.),<br>06 December, 1991 (06.12.91),<br>Claims   (Family: none) | 1-22 |
| A | JP, 6-287506, A (Hitachi Chemical Co., Ltd.),<br>11 October, 1994 (11.10.94),<br>Claims   (Family: none) | 1-22 |

☐   Further documents are listed in the continuation of Box C.     ☐   See patent family annex.

| | |
|---|---|
| \*     Special categories of cited documents:<br>"A"   document defining the general state of the art which is not considered to be of particular relevance<br>"E"   earlier document but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>     30 June, 2000 (30.06.00) | Date of mailing of the international search report<br>     11 July, 2000 (11.07.00) |
| Name and mailing address of the ISA/<br>     Japanese Patent Office | Authorized officer |
| Facsimile No. | Telephone No. |

Form PCT/ISA/210 (second sheet) (July 1992)